# FASCICULE DE BREVET EUROPEEN

(11) **EP 0 604 311 B1**
(45) Date de publication et mention de la délivrance du brevet: **12.03.1997**
(21) Numéro de dépôt: 93403132.9
(22) Date de dépôt: 21.12.1993
(51) Int. Cl.: G06F 11/00, G06F 11/18

(54) **Procédé de gestion de fichiers, support d'enregistrement et système informatique l'incorporant**
Dateienverwaltungsverfahren, Aufzeichnungsmedium und Rechnersystem dafür
File managing method, recording medium and computer system incorporating it

(30) Priorité: 22.12.1992 FR 9215520
(43) Date de publication de la demande: 29.06.1994
(73) Titulaire: BULL S.A., 78430 Louveciennes (FR)
(72) Inventeur: Villette, Michel, F-78150 Le Chesnay (FR); Cayuela, Rémi, F-78160 Marly-le-Roi (FR)
(74) Mandataire: Denis, Hervé

(56) Documents cités:
- SOFTWARE PRACTICE & EXPERIENCE vol. 16, no. 8 , Aoüt 1986 , CHICHESTER GB pages 772 - 780 BRERETON, O.P. 'Management of Replicated files in a UNIX environment'
- SOFTWARE PRACTICE & EXPERIENCE vol. 21, no. 7 , Juillet 1991 , CHICHESTER GB pages 657 - 675 CHENG ET AL. 'Design and implementation of a distributed file systems'
- SOFTWARE PRACTICE & EXPERIENCE vol. 15, no. 7 , Juillet 1985 , CHICHESTER GB pages 637 - 654 TICHY W.F. 'RCS-A system for version control'

## Description

L'invention se rapporte à un procédé de gestion de fichiers. Elle s'applique généralement aux systèmes informatiques pour la gestion de fichiers informatiques et plus particulièrement pour l'amélioration de la disponibilité de fichiers. Elle a aussi pour objets corollaires le support d'enregistrement incorporant un logiciel pour la mise en oeuvre du procédé, ainsi que le système informatique le mettant en oeuvre.

Les fichiers informatiques sont généralement stockés sur des supports magnétiques, des disques ou des bandes. Aucun des supports ne peut procurer de garantie totale de disponibilité. L'indisponibilité d'un support peut avoir de multiples causes, allant de la simple erreur que l'on peut réparer pour restituer tout le fichier que le support contenait à la destruction définitive du support physique et de ses fichiers. Même si par exemple les disques optiques numériques non réinscriptibles procurent une garantie de fidélité et de durabilité de leurs fichiers, le support physique peut toujours être endommagé, lors de sa manipulation par exemple. Il est donc nécessaire de disposer d'un procédé de gestion des fichiers afin de ne pas perdre leurs données.

Le document "Software practice & experience", Vol. 16, no 8, Aout 1986, Chichester GB p. 772-780, Breretor O.P, "Management of replicated files in an Unix environment" décrit un système de gestion de fichiers.

La gestion des fichiers en cours et leur archivage consiste actuellement à faire une ou plusieurs copies sur des supports d'enregistrement analogues pour en augmenter leur disponibilité. Cependant, les fichiers sont évolutifs, à commencer lors de leur élaboration, puis souvent ils subissent plusieurs versions. Cette évolution pose un grave problème en cas de panne de la machine qui traite les fichiers ou en cas de détérioration partielle ou totale de leur support.

Un défaut sur un disque peut être réparé et le disque peut redevenir totalement ou partiellement disponible. De même, une panne de machine peut effacer une partie nouvelle du fichier et sa réparation peut laisser l'utilisateur dans une situation sûre ou dans une configuration incertaine. Le problème devient beaucoup plus grave lorsque des fichiers peuvent être traités par plusieurs personnes par l'intermédiaire de plusieurs machines distantes. Pour ces personnes, il devient impératif de gérer la disponibilité des fichiers et de leurs différentes versions sans risque de perdre leur mise à jour ou d'aboutir à une incohérence due à l'existence de diverses versions disponibles.

La solution actuelle de gestion des fichiers pose cependant un problème majeur en cas de panne intermittente sur au moins l'un de leurs supports. La solution classique consiste à incrémenter d'une unité les numéros des versions successives. Ainsi, si un des supports tombe en panne, il suffit de se reporter aux numéros des versions disponibles sur les autres supports pour savoir quelle est la dernière version. Mais cette solution s'avère en pratique vite insuffisante à cause des pannes intermittentes sur au moins l'un des supports. Par exemple, on suppose que l'on dispose de cinq copies identiques de la version n°1 sur cinq supports respectifs. Un utilisateur fait sur l'un des supports une modification pour constituer la version n°2. Si ce support devient indisponible, l'utilisateur ou d'autres utilisateurs de la même machine ou d'autres machines vont se fonder sur les quatre versions n°1 identiques pour en faire une mise à jour et constituer une nouvelle version qui portera donc le numéro 2. Entre temps, le disque en panne a été envoyé en réparation et le disque réparé est retourné en rendant disponible la première version portant elle aussi le numéro 2 mais normalement différente de la seconde version n°2 faite sur les autres supports. Une confusion va s'instaurer et produire des mélanges variés sous des numéros de version identiques. De surcroît, une autre panne intermittente sur l'un des supports produira une nouvelle confusion. Il s'ensuit qu'en pratique les copies deviennent vite incohérentes.

L'invention résout ce problème dû aux pannes intermittentes et propose un procédé de gestion des copies qui a l'avantage d'être facilement mis en oeuvre tout en offrant une grande sûreté d'utilisation et un fonctionnement automatique dans la majorité des cas.

L'invention telle qu'elle est définie dans les revendications a pour objet un procédé de gestion d'un fichier comprenant la mise à jour du fichier par incrémentation d'une unité des numéros des versions successives du fichier disponibles sur au moins deux supports, caractérisé en ce qu'il consiste, en fonctionnement normal, à mettre à jour l'ensemble des supports disponibles après élection d'une version majoritaire et réécriture de la version majoritaire sur les supports ne la contenant pas et, à la suite d'une indisponibilité d'un support, à mettre à jour l'ensemble des supports disponibles après élection et réécriture de la version majoritaire et incrémentation de son numéro de deux unités.

Un support d'enregistrement et un système informatique mettant en oeuvre ce procédé constituent par conséquent aussi des objets de l'invention.

Les caractéristiques et avantages de l'invention ressortiront de la description qui suit, donnée à titre d'exemple et illustrée dans les dessins annexés.

Dans les dessins :
- les figures 1A-1J illustrent un exemple de gestion de cinq exemplaires d'un fichier conformément au procédé de l'invention ; et
- les figures 2A et 2B illustrent deux diagrammes représentatifs de l'écriture et la lecture de fichiers faites conformément au procédé de gestion des cinq exemplaires représentés sur la figure 1.

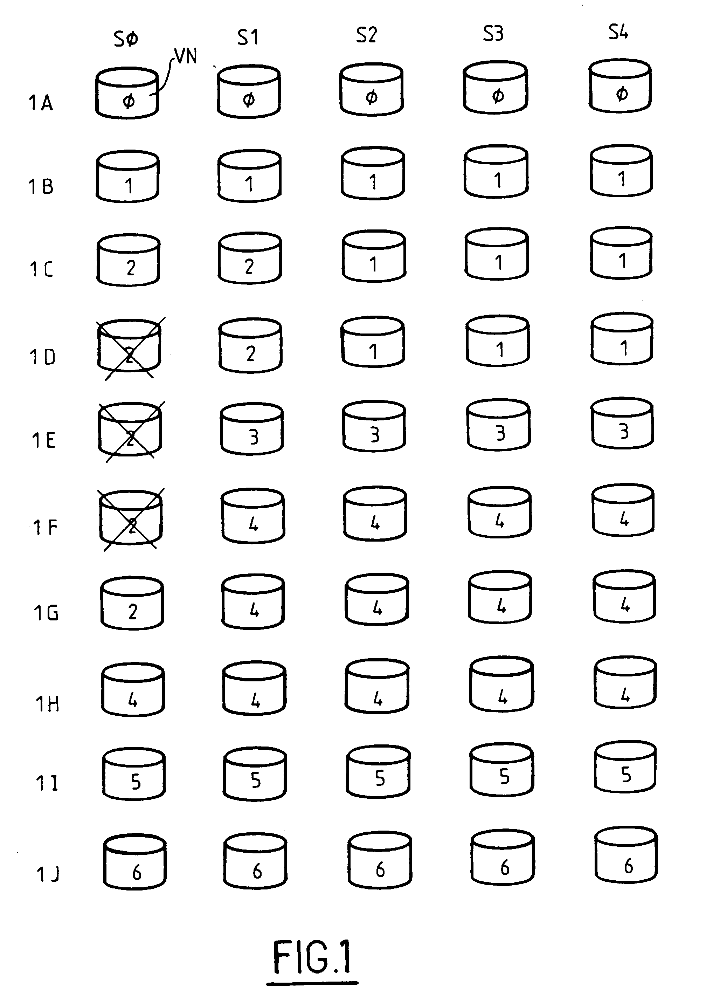

La figure 1A illustre un nombre n égal à cinq de supports S0-S4 de l'enregistrement d'un fichier nouvellement créé sous le numéro de version VN = 0. Les supports peuvent être de types semblables ou différents les uns des autres, par exemple des disques durs, des disquettes magnétiques, des disques optiques et des bandes magnétiques.

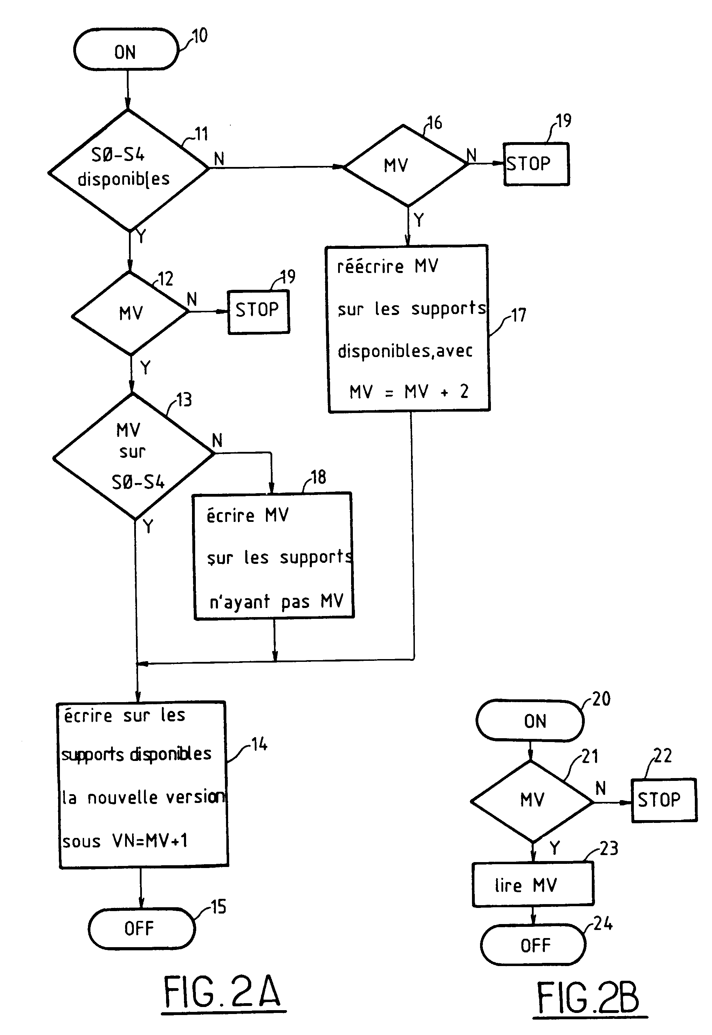

Les figures 1B-1J illustrent diverses étapes dans la gestion du fichier selon le procédé conforme à l'invention. Le mode d'écriture du fichier pour sa mise à jour et le mode de lecture du fichier conformément au procédé de l'invention sont illustrés sous forme de diagrammes fonctionnels respectifs dans les figures 2A et 2B. Selon l'invention, on définit une version majoritaire MV du fichier enregistré sur l'ensemble des n supports, accessibles ou non. Selon la définition de l'exemple choisi, une version de numéro VN est dite version majoritaire MV si et seulement si plus de la moitié, au sens strict, de l'ensemble des n supports est accessible et contient cette version. Dans l'exemple illustré, une version sera donc majoritaire si elle est contenue dans au moins trois des cinq supports.

En référence aux figures 1A et 2A, on se propose maintenant d'écrire dans le fichier de version VN = 0 pour sa mise à jour. Le procédé d'écriture débute en verrouillant l'accès aux supports S0-S4, correspondant au mode d'accès exclusif (bloc 10 du diagramme). Le procédé d'écriture consiste d'abord à rechercher si tous les supports S0-S4 sont accessibles (bloc 11 du diagramme). En supposant dans le cas présent que tous les supports S0-S4 de la figure 1A sont accessibles, le procédé d'écriture consiste alors à élire la version majoritaire MV parmi les cinq supports (bloc 12). Dans l'exemple illustré dans la figure 1A, la version majoritaire MV a le numéro de version VN = 0. Le procédé se poursuit en recherchant si tous les supports contiennent la version majoritaire MV = 0 (bloc 13). Cela étant le cas illustré dans la figure 1A, la nouvelle version est écrite sur tous les supports S0-S4 sous le numéro de version VN = MV + 1 où MV désigne le numéro de la version majoritaire, soit ici VN = 1 (bloc 14). L'écriture se termine par le déverrouillage de l'accès aux supports (bloc 15).

De préférence, l'écriture de la nouvelle version du fichier sur tous les supports est faite de manière successive. En effet, si l'écriture est faite en parallèle sur l'ensemble des supports et si elle est interrompue par suite d'une coupure de courant par exemple, tous les supports sont affectés par cet accident. Il s'ensuit que la version originale VN = 0 n'est plus disponible et que la nouvelle version qui porterait le numéro suivant VN = 1 ne serait en fait qu'une partie de la nouvelle version. Au contraire, l'écriture successive offre l'avantage de toujours disposer d'une copie entière de la version originale avant l'écriture de la nouvelle version du fichier sur le dernier support et de conserver aussi au moins une copie de la nouvelle version si l'accident se produit après l'écriture de la nouvelle version sur au moins l'un des supports.

La figure 1C illustre un exemple de mise à jour interrompue du fichier dans une nouvelle version de numéro VN = 2. Selon cet exemple, les deux supports S0 et S1 ont reçu la nouvelle version tandis que les autres supports S2-S4 gardent la version précédente de numéro 1.

Dans la figure 1D, on a supposé qu'en outre le support S0 est devenu indisponible lors d'une nouvelle tentative de mise à jour pour l'écriture d'une nouvelle version. En référence à la figure 2A, après verrouillage de l'accès aux supports, la recherche effectuée dans le bloc 11 constate l'indisponibilité du support S0 et fournit un résultat négatif conduisant au bloc 16 du diagramme. Dans ce bloc, on élit la version majoritaire parmi les quatre supports encore disponibles S1-S4. Dans l'exemple illustré dans la figure 1D, la version de numéro 1 est contenue dans les supports S2, S3 et S4, tandis que la version de numéro 2 est seulement contenue dans le support S1. La version majoritaire MV a donc le numéro VN = 1. Le résultat de la recherche faite au niveau du bloc 16 étant positif, il conduit au bloc 17 du diagramme. A cette étape du procédé conforme à l'invention, la version majoritaire VM est réécrite sur tous les supports disponibles S1-S4 sous le numéro MV = MV + 2. Dans le cas présent, la version majoritaire ayant le numéro 1, cette version est donc réécrite sous le numéro 3, comme illustré dans la figure 1E. Pour les mêmes raisons que précédemment, la réécriture est faite de préférence de façon successive. Le procédé de l'invention conduit alors au bloc 14 du diagramme. Dans cette étape, la nouvelle version que l'on voulait enregistrer sur tous les supports disponibles S1-S4 y est écrite sous le numéro VN = MV + 1, soit VN = 4, comme illustré dans la figure 1F.

Dans la figure 1G, on a supposé que le support indisponible S0 a été réparé et réintroduit parmi les autres supports S1-S4. Le support S0 porte le numéro de version VN = 2, alors que les autres supports S1-S4 portent le numéro de version 4. Une nouvelle mise à jour se fait conformément au procédé de l'invention illustré dans la figure 2A. Après le verrouillage de l'accès aux supports, la recherche faite dans l'étape du bloc 11 constate que tous les supports sont disponibles et conduit donc au bloc 12. A cette étape, la version majoritaire MV élue a le numéro de version VN = 4. Le procédé conduit donc au bloc 13, où il est constaté que tous les supports ne contiennent pas la version majoritaire. Le procédé conduit donc vers une étape nouvelle résidant dans le bloc 18 du diagramme. Cette étape consiste à écrire la version majoritaire MV sur les supports qui ne la contiennent pas. En l'occurrence, la version majoritaire MV = 4 est écrite dans le support S0 en remplacement de la version portant le numéro 2, comme illustré dans la figure 1H. Le procédé vient alors à l'étape du bloc 14. La nouvelle version est alors écrite dans tous les supports S0-S4 sous le numéro VN = MV + 1, soit ici VN = 5, comme illustré dans la figure 11. L'écriture se termine alors au bloc 15 par le déverrouillage de l'accès aux supports.

Une nouvelle mise à jour sans indisponibilité des supports se fait alors de la même façon que celle décrite en référence à la figure 1A et conduit à l'état représenté sur la figure 1J, où tous les supports portent la version ayant le numéro 6.

Il faut noter que si dans les blocs 12 et 16 l'élection d'une version majoritaire MV s'avère impossible, le procédé est mis alors à un état d'échec et s'arrête dans les blocs 19 correspondants du diagramme. Cependant, l'absence de version majoritaire est en principe un cas rare, puisqu'elle a lieu lorsque plus de la moitié des supports sont ou ont été indisponibles quasiment en même temps. Si quand même elle se produit, une intervention est nécessaire pour éliminer définitivement une ou plusieurs copies de façon qu'à nouveau une version devienne majoritaire.

La figure 2B illustre un exemple de diagramme de lecture du fichier faite selon le procédé de gestion de fichier conforme à l'invention. Le procédé commence au bloc 20 par le verrouillage de l'accès aux supports en mode partagé. Il vient alors au bloc 21 pour élire la version majoritaire MV. En l'absence de cette version, la lecture devient impossible à cause du dilemme posé par l'existence de deux versions rivales. Le procédé s'arrête ainsi au bloc 22 pour solliciter l'intervention humaine de façon à déterminer laquelle des deux versions est majoritaire. Si par contre une version majoritaire est élue, la lecture se fait dans l'un quelconque des supports contenant la version majoritaire (bloc 23). Le procédé de lecture s'achève au bloc 24 par le déverrouillage de l'accès aux supports.

De manière générale, l'exemple illustré a bien mis en relief que l'objet de l'invention est un procédé de gestion d'un fichier comprenant, selon le procédé classique, la mise à jour du fichier par incrémentation d'une unité des numéros des versions successives du fichier disponibles sur au moins deux supports et consistant, selon l'invention, à mettre à jour, en fonctionnement normal, l'ensemble des supports disponibles après avoir élu une version majoritaire et réécrit la version majoritaire sur les supports ne la contenant pas et, à la suite d'une indisponibilité d'un support, à mettre à jour l'ensemble des supports disponibles après avoir élu et réécrit la version majoritaire sous un numéro incrémenté de deux unités.

On a vu dans l'exemple illustré que le procédé a consisté à élire comme version majoritaire MV la version contenue dans plus de la stricte moitié du nombre total des supports. Dans ce cas, il ressort aussi de l'exemple décrit et illustré que le procédé de l'invention ne peut être efficace que si le nombre total n de supports est au moins égal à trois. En effet, en utilisant trois supports, la défaillance d'un support permet encore d'établir une version majoritaire si les deux autres supports ont la même version. Avec n = 2, la défaillance de l'un des supports ne laisse pas le choix de l'élection de la version majoritaire et celle-ci correspond à la stricte moitié du nombre 2 de supports, et non à plus de la stricte moitié comme cela est exigé dans la définition précitée. Cependant, on voit qu'une définition moins restrictive de la version majoritaire est possible, mais son application pourrait être moins efficace que celle qui en a été donnée. On comprend que le nombre minimal de supports pour la mise en oeuvre du procédé de l'invention dépend notamment de la définition de la version majoritaire. Il vaut nécessairement deux pour une définition non restrictive et peut être supérieur à trois si on donne une définition encore plus restrictive. L'exemple illustré réalise un bon compromis et constitue le mode de réalisation préféré de l'invention.

On a vu aussi que dans l'exemple décrit la mise à jour conforme au procédé de l'invention consiste à rechercher dans l'étape du bloc 11 si tous les supports sont disponibles avant d'élire la version majoritaire. Cette solution facilite le déroulement du procédé, comme cela ressort de la figure 2A.

Selon cet exemple aussi, le procédé est interrompu si une version majoritaire ne peut pas être élue. Cependant, il est clair que d'autres solutions sont possibles, comme par exemple celle consistant à prendre la version portant le numéro VN le plus élevé.

L'exemple illustré a encore mis en relief l'avantage de faire successivement la mise à jour sur l'ensemble des supports, comme aussi la réécriture de la version majoritaire.

Enfin, la figure 2B de l'exemple illustré a montré qu'avantageusement la lecture du fichier consiste à rechercher la version majoritaire et à lire l'un des supports la contenant.

Il est clair que l'invention a aussi pour objet tout support d'enregistrement incorporant un logiciel de gestion de fichier pour la mise en oeuvre du procédé qui vient d'être décrit dans sa forme générale, ainsi que le système informatique qui met en oeuvre ce procédé. On comprend de la description précédente que l'invention convient à tout système informatique mono ou multiprocesseur et qu'elle est plus particulièrement avantageuse dans un système multiprocesseur.

## Revendications

1. Procédé de gestion d'un fichier dont existent plusieurs versions distinguées par un numéro comprenant la mise à jour du fichier par incrémentation d'une unité des numéros des versions successives du fichier disponibles sur au moins deux supports (S0-S4), caractérisé en ce qu'il consiste, en fonctionnement normal, à mettre à jour l'ensemble des supports disponibles après élection d'une version majoritaire (MV) et réécriture de la version majoritaire sur les supports ne la contenant pas et, à la suite d'une indisponibilité d'un support, à mettre à jour l'ensemble des supports disponibles après élection et réécriture de la version majoritaire et incrémentation de son numéro de deux unités.

2. Procédé selon la revendication 1, caractérisé en ce qu'il utilise un nombre minimal de supports déterminé par la définition de la version majoritaire.

3. Procédé selon la revendication 1 ou 2, caractérisé en ce qu'il consiste à élire comme version majoritaire (MV) la version contenue dans plus de la stricte moitié du nombre total des supports et à disposer d'un nombre minimal de trois supports.

4. Procédé selon l'une des revendications 1 à 3, caractérisé en ce qu'il consiste à rechercher si tous les supports sont disponibles avant d'élire la version majoritaire.

5. Procédé selon l'une des revendications 1 à 4, caractérisé en ce qu'il est interrompu si une version majoritaire ne peut pas être élue.

6. Procédé selon l'une des revendications 1 à 5, caractérisé en ce que la mise à jour se fait successivement sur l'ensemble des supports.

7. Procédé selon l'une des revendications 1 à 6, caractérisé en ce que la réécriture de la version majoritaire est successive.

8. Procédé selon l'une des revendications 1 à 7, caractérisé en ce que la lecture du fichier consiste à rechercher la version majoritaire et à lire l'un des supports la contenant.

9. Système informatique, caractérisé en ce qu'il met en oeuvre le procédé défini par l'une des revendications 1 à 8.

## Patentansprüche

1. Verfahren zur Verwaltung einer Datei, von der mehrere durch eine Nummer unterschiedene Versionen existieren, das die Aktualisierung der Datei durch Inkrementierung der Nummern der aufeinanderfolgenden Versionen der Datei um eine Einheit enthält, wobei die Datei auf wenigstens zwei Medien (S0-S4) verfügbar ist, dadurch gekennzeichnet, daß es darin besteht, im Normalbetrieb die Gesamtheit der verfügbaren Medien nach Auswahl einer Mehrheitsversion (MV) zu aktualisieren und die Mehrheitsversion auf die Medien neu zu schreiben, die diese nicht enthalten und, infolge einer Nichtverfügbarkeit eines Mediums, die Gesamtheit der verfügbaren Medien nach Auswahl und Neuschreiben der Mehrheitsversion und Inkrementierung seiner Nummer um zwei Einheiten zu aktualisieren.

2. Verfahren nach Anspruch 1, dadurch gekennzeichnet, daß es eine minimale Medienanzahl verwendet, die durch die Definition der Mehrheitsversion bestimmt ist.

3. Verfahren nach Anspruch 1 oder 2, dadurch gekennzeichnet, daß es darin besteht, als Mehrheitsversion (MV) die Version auszuwählen, die in mehr als der genauen Hälfte der Gesamtzahl der Medien enthalten ist, und eine minimale Anzahl von drei Medien einzurichten.

4. Verfahren nach einem der Ansprüche 1 bis 3, dadurch gekennzeichnet, daß es darin besteht, vor dem Auswählen der Mehrheitsversion zu untersuchen, ob alle Medien verfügbar sind.

5. Verfahren nach einem der Ansprüche 1 bis 4, dadurch gekennzeichnet, daß es unterbrochen wird, wenn eine Mehrheitsversion nicht ausgewählt werden kann.

6. Verfahren nach einem der Ansprüche 1 bis 5, dadurch gekennzeichnet, daß die Aktualisierung in der Gesamtheit der Medien nacheinander erfolgt.

7. Verfahren nach einem der Ansprüche 1 bis 6, dadurch gekennzeichnet, daß das Neuschreiben der Mehrheitsversion nacheinander erfolgt.

8. Verfahren nach einem der Ansprüche 1 bis 7, dadurch gekennzeichnet, daß das Lesen der Datei darin besteht, die Mehrheitsversion zu suchen und eines der Medien, das diese enthält, zu lesen.

9. Datenverarbeitungssystem, dadurch gekennzeichnet, daß es das Verfahren, das in einem der Ansprüche 1 bis 8 definiert ist, durchführt.

## Claims

1. A method of managing a file, of which there are several versions distinguished by a number, comprising the updating of the file by increasing by one unit the numbers of successive versions of the file available on at least two media (S0-S4), characterised in that it consists, in normal operation, of updating all the media available after electing a majority version (MV) and rewriting the majority version to the media that do not contain it and, after a medium becomes unavailable, of updating all the media available after electing and rewriting the majority version and increasing its number by two units.

2. A method according to Claim 1, characterised in that it uses a minimum number of media determined by the definition of the majority version.

3. A method according to Claim 1 or 2, characterised in that it consists of electing as the majority version (MV) the version contained on more than strictly half of the total number of media and of having available a minimum number of three media.

4. A method according to one of Claims 1 to 3, characterised in that it consists of finding out whether all the media are available before electing the majority version.

5. A method according to one of Claims 1 to 4, characterised in that it is interrupted if a majority version cannot be elected.

6. A method according to one of Claims 1 to 5, characterised in that updating takes place successively on all the media.

7. A method according to one of Claims 1 to 6, characterised in that the rewriting of the majority version is successive.

8. A method according to one of Claims 1 to 7, characterised in that the reading of the file consists of searching for the majority version and reading one of the media containing it.

9. A computer system, characterised in that it implements the method defined by one of Claims 1 to 8.
